(19) Europäisches Patentamt
European Patent Office
Office européen des brevets

(11) **EP 2 596 577 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(21) Anmeldenummer: **11730963.3**

(22) Anmeldetag: **08.07.2011**

(51) Int Cl.:
*H02P 6/00* (2016.01)    *H02P 6/18* (2016.01)
*H02P 6/08* (2006.01)

(86) Internationale Anmeldenummer:
**PCT/EP2011/061661**

(87) Internationale Veröffentlichungsnummer:
**WO 2012/010445 (26.01.2012 Gazette 2012/04)**

(54) **VERFAHREN UND VORRICHTUNG ZUM ANSTEUERN EINER MEHRPHASIGEN ELEKTRONISCH KOMMUTIERTEN ELEKTRISCHEN MASCHINE SOWIE EIN MOTORSYSTEM**

METHOD AND DEVICE FOR CONTROLLING A MULTI-PHASE ELECTRONICALLY COMMUTATED ELECTRIC MACHINE AND A MOTOR SYSTEM

PROCÉDÉ ET DISPOSITIF DE COMMANDE D'UNE MACHINE ÉLECTRIQUE POLYPHASÉE, ET SYSTÈME MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2010 DE 102010031566**

(43) Veröffentlichungstag der Anmeldung:
**29.05.2013 Patentblatt 2013/22**

(73) Patentinhaber: **Robert Bosch GmbH**
**70442 Stuttgart (DE)**

(72) Erfinder: **KNECHT, Gerhard**
**76473 Iffezheim (DE)**

(56) Entgegenhaltungen:
**US-A- 5 493 189        US-A- 6 064 175
US-A1- 2007 252 542    US-B1- 6 181 093**

**Beschreibung**

Technisches Gebiet

Die vorliegende Erfindung betrifft elektronisch kommutierte elektrische Maschinen, an die Phasenspannungen angelegt werden, um die elektrische Maschine anzutreiben. Weiterhin betrifft die vorliegende Erfindung, Verfahren zur sensorlosen Detektion einer Läuferlage der elektrischen Maschine.

Stand der Technik

Mehrphasige elektronisch kommutierte elektrische Maschinen, insbesondere Synchronmotoren, können z. B. durch Bereitstellen eines einem von einem Läufer bereitgestellten Erregermagnetfeld voreilenden Statormagnetfelds angetrieben werden. Das Statormagnetfeld, insbesondere dessen Richtung und Stärke, wird durch Anlegen von Phasenspannungen an Phasenstränge des Stators der elektrischen Maschine erzeugt.

Um die Voreilung des Statormagnetfelds bestimmen zu können, ist eine Kenntnis. über die Läuferlage des Läufers der elektrischen Maschine notwendig. Häufig wird bei derartigen elektrischen Maschinen zur Einsparung eines Lagesensors die Läuferlage sensorlos bestimmt. Ein mögliches Verfahren besteht darin, die induzierte Gegenspannung in den Phasensträngen zu messen und den Zeitpunkt von deren Nulldurchgang zu bestimmen. Der Zeitpunkt des Nulldurchgangs der induzierten Gegenspannung kann zur Bestimmung der Läuferlage verwendet werden (Back-EMF-Verfahren).

Um die induzierte Gegenspannung zu messen, muss gewährleistet sein, dass an den jeweiligen Phasenstrang keine externe Spannung angelegt wird. Bei einer Ansteuerung der elektrischen Maschine mithilfe einer Blockkommutierung ist jedoch in der Regel zu jedem Zeitpunkt der entsprechende Phasenstrang mit einer ansteuernden Phasenspannung belegt, so dass dieses sensorlose Verfahren nicht angewendet werden kann oder weitere Maßnahmen notwendig sind, um trotz einer Blockkommutierung die induzierte Gegenspannung zu messen.

Daher wird üblicherweise bei Anwendung der Blockkommutierung eine Treiberschaltung, die zum Ansteuern der elektrischen Maschine Phasenspannungen generiert, so angesteuert, dass in einem Zeitfenster, in dem die induzierte Gegenspannung gemessen werden soll, an den jeweiligen Phasenstrang keine externe Spannung angelegt wird bzw. der entsprechende Phasenanschluss für den Phasenstrang frei schwebend geschaltet wird, so dass die induzierte Gegenspannung gemessen werden kann. Das Zeitfenster, in dem der jeweilige Phasenstrang nicht mit einem Spannungspotential bzw. einer Phasenspannung beaufschlagt wird, wird Austastlücke genannt und wird so gewählt, dass der Nulldurchgang der induzierten Gegenspannung umfasst ist. Der Zeitpunkt des Nulldurchgangs der induzierten Gegenspannung kann einer bestimmten Läuferlage eindeutig zugeordnet und dazu verwendet werden, die Zeitpunkte des Umschaltens zwischen Ansteuermustern zum Anlegen der Phasenspannungen an die Phasenstränge der elektrischen Maschine zu ermitteln.

Im Falle von Dauerläufern wie Pumpen oder Lüftern reicht es aufgrund von begrenzten Dynamikanforderungen oftmals aus, nur den Nulldurchgang der induzierten Gegenspannung eines Phasenstrangs zu erfassen. Damit existiert insgesamt eine kostengünstige Möglichkeit zum sensorlosen Betrieb von derartigen Pumpen und Lüftern.

Die umgesetzte Blockkommutierung und das Vorsehen der Austastlücke führen jedoch zu einer hohen Geräuschentwicklung, die durch die abrupten Umkommutierungen/Umschaltungen entsteht. Die Umkommutierungen bewirken relativ steilflankige Strangstromänderungen. Die daraus entstehenden Momentenrippel und Radialkraftanregungen führen zu deutlich wahrnehmbaren Geräuschen. Beim Einsatz derartiger elektrischer Maschinen in Elektrofahrzeugen ist die Beachtung der Geräuschemission wichtig, weil dort die Geräusche der Vorrichtungen, die mit derartigen elektrischen Maschinen ausgestattet sind, deutlicher wahrnehmbar sind, da sie nicht mehr von einem relativ lauten Verbrennungsmotor übertönt werden. Das Verringern der Geräuschemission durch sauftere Kommutierungsübergänge ist Gegenstand verschiedener Druckschriften, z.B. US 2007252542, US 6181093, US 6064175, US 5493189,

Es ist daher Aufgabe der vorliegenden Erfindung, eine elektronisch kommutierte elektrische Maschine zur Verfügung zu stellen, die sensorlos betrieben werden kann und eine geringe Geräuschentwicklung aufweist.

Offenbarung der Erfindung

Diese Aufgabe wird durch das Verfahren zum Ansteuern einer elektronisch kommutierten mehrphasigen elektrischen Maschine gemäß Anspruch 1 sowie durch die Vorrichtung gemäß Anspruch 6 und das Motorsystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Betreiben einer elektronisch kommutierten elektrischen Maschine vorgesehen. Für eine Kommutierung werden wechselnde Phasenspannungspotentiale an die Phasenstränge der elektrischen Maschine angelegt, wobei die Phasenspannungspotentiale durch eine Pulsweitenmodulation erzeugt werden, so dass die Höhe des anliegenden Phasenspannungspotentials durch ein Tastverhältnis der Pulsweitenmodulation bestimmt ist. Zum Bestimmen eines Zeitpunkts eines Nulldurchgangs einer in einem Phasenstrang induzierten Spannung ist eine Austastlücke vorgesehen, die ein Zeitfenster darstellt, während dessen kein Phasenspannungspotential an den entsprechenden Phasenstrang angelegt wird, wobei vor und/oder nach der Austastlücke eine erste Übergangszeitdauer vorgesehen ist, während der der Verlauf des angelegten Phasenspannungspotentials einen begrenzten ersten Gradienten aufweist.

Eine Idee der vorliegenden Erfindung besteht darin, bei einer Austastlücke zur Messung eines Zeitpunkts eines Nulldurchgangs einer in einem Phasenstrang induzierten Spannung Kommutierungsübergänge für die Änderungen der Phasenspannungspotentiale zur Realisierung der Austastlücke vorzusehen, die zwischen den Bestromungsmustern nicht sprunghaft sondern mit einem begrenzten ersten Gradienten erfolgen. Durch derartige "sanfte" Kommutierungsübergänge ist die Geräuschentwicklung einer so betriebenen elektronisch kommutierten elektrischen Maschine deutlich geringer, da die Momentenrippel und Radialkraftanregungen reduziert werden.

Weiterhin kann das Phasenspannungspotential im Übergangsbereich linear verlaufen.

Gemäß einer Ausführungsform können die Phasenspannungspotentiale gemäß einer Blockkommutierung angelegt werden, wobei bei jedem Wechsel zwischen Phasenspannungspotentialen während einer zweiten Übergangszeitdauer der Verlauf des angelegten Phasenspannungspotentials einen begrenzten zweiten Gradienten aufweist.

Da bei einer Blockkommutierung mit derartigen Kommutierungsübergängen jedoch keine Zeitfenster mehr vorhanden sind, in denen kein (schwebendes bzw. floatendes) Phasenspannungspotential an den jeweiligen Phasenstrang angelegt ist, um die induzierte Gegenspannung zu messen, wird die Austastlücke an einem Kommutierungsübergang vorgesehen.

Durch die sanfteren Kommutierungsübergänge sowohl zwischen den Kommutierungsübergängen zwischen den Phasenspannungspotentialen als auch zur Austastlücke weist der gesteuerte Strangstrom keine nennenswerten Gradienten mehr auf, sondern verläuft relativ glatt und hat einen quasi sinusförmigen Verlauf.

Dadurch können einerseits eine Geräuschreduktion von elektronisch kommutierten elektrischen Maschinen und andererseits die Verwendung des BEMF-Verfahrens zum Realisieren eines sensorlosen Motorbetriebs kombiniert werden.

Es kann vorgesehen sein, dass der zweite Gradient der Phasenspannungspotentiale betragsmäßig geringer ist als der erste Gradient der Phasenspannungspotentiale.

Während der ersten Übergangszeitdauer kann der Verlauf des Phasenspannungspotentials von einem Mittenspannungspotential ausgehen oder an dem Mittenspannungspotential enden, wobei das Mittenspannungspotential als der Mittelwert der Phasenspannungspotentiale vor und nach der mit den Übergangszeitdauern versehenen Austastlücke bestimmt ist.

Gemäß einem weiteren Aspekt ist eine Vorrichtung zum Betreiben einer elektronisch kommutierten elektrischen Maschine mit einer Steuereinheit vorgesehen, die ausgebildet ist:

- um für eine Kommutierung wechselnde Phasenspannungspotentiale an die Phasenstränge der elektrischen Maschine anzulegen,
- um die Phasenspannungspotentiale durch eine Pulsweitenmodulation zu erzeugen, so dass die Höhe des anliegenden Phasenspannungspotentials durch ein Tastverhältnis der Pulsweitenmodulation bestimmt ist,
- um zum Bestimmen eines Zeitpunkts eines Nulldurchgangs einer in einem Phasenstrang induzierten Spannung eine Austastlücke vorzusehen, die ein Zeitfenster darstellt, während dessen kein Phasenspannungspotential an den entsprechenden Phasenstrang angelegt wird, und
- um vor und/oder nach der Austastlücke eine erste Übergangszeitdauer vorzusehen, während der der Verlauf des angelegten Phasenspannungspotentials einen begrenzten ersten Gradienten aufweist.

Gemäß einem weiteren Aspekt ist ein Motorsystem mit einer elektronisch kommutierten elektrischen Maschine und mit der obigen Vorrichtung vorgesehen.

Gemäß einem weiteren Aspekt ist ein Computerprogrammprodukt vorgesehen, das einen Programmcode enthält, der, wenn er auf einer Datenverarbeitungseinrichtung ausgeführt wird, das obige Verfahren durchführt.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1    eine schematische Darstellung eines Motorsystems zum Betreiben einer mehrphasigen elektronisch kommutierten elektrischen Maschine;

Figur 2    ein Diagramm zur schematischen Darstellung des Kommutierungsmusters bei einer Blockkommutierung zur Ansteuerung der elektrischen Maschine gemäß dem Stand der Technik; und

Figur 3     ein Diagramm zur schematischen Darstellung einer Kommutierung gemäß einer Ausführungsform der vorliegenden Erfindung mit einem Austastzeitfenster.

Beschreibung von Ausführungsformen

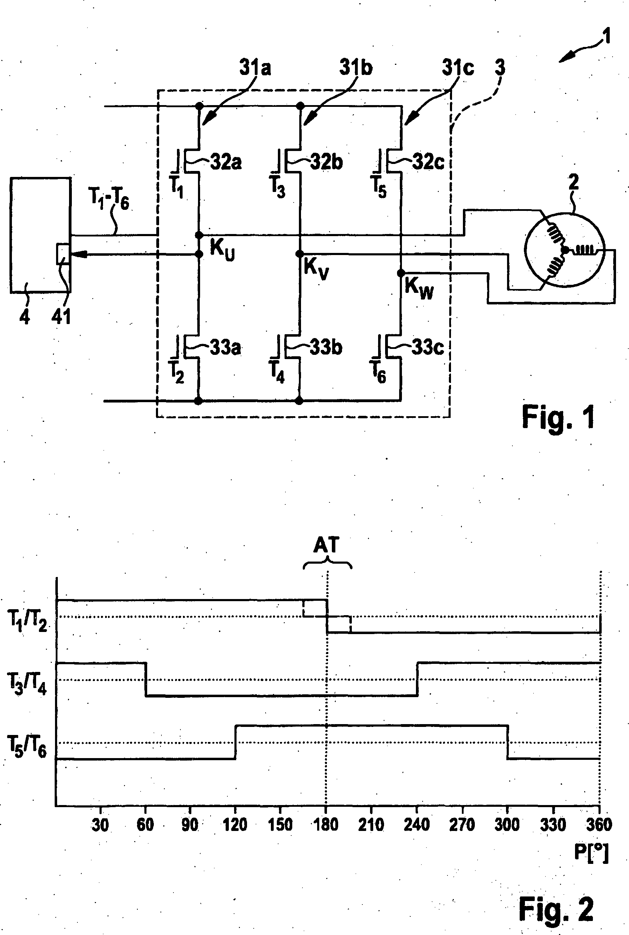

Figur 1 zeigt ein Motorsystem 1 mit einer elektrischen Maschine 2. Die elektrische Maschine 2 ist elektronisch kommutiert, d.h. an Phasenstränge, z. B. an einen nicht gezeigten Stator, die jeweils eine oder mehrere Spulenwicklungen umfassen, werden wechselnde Phasenspannungen angelegt, um einen Läufer der elektrischen Maschine 2 anzutreiben. Die elektrische Maschine 2 ist beispielsweise in Form eines Synchronmotors, eines Asynchronmotors oder in sonstiger vergleichbarer Weise ausgebildet. Im dargestellten Ausführungsbeispiel handelt es sich bei der elektrischen Maschine 2 um einen Synchronmotor mit drei Phasensträngen, die in einer Sternschaltung verschaltete Spulenwicklungen um Statorzähne umfassen.

Der Synchronmotor 2 wird mithilfe einer Treiberschaltung 3 angesteuert. Die Treiberschaltung 3 stellt dazu drei Phasenanschlüsse $K_U$, $K_V$ und Kw bereit, an die jeweilige Phasenspannungspotentiale angelegt werden. Die Phasenspannungspotentiale an den Phaserianschlüssen $K_U$, Kv und Kw werden von jeweiligen Inverterschaltungen 31 bereitgestellt.

Jede der Inverterschaltungen 31 weist einen High-Side-Leistungsschalter 32 und einen Low-Side-Leistungsschalter 33 auf, die seriell verschaltet sind. Die Leistungsschalter 32, 33 können in Form von Leistungs-MOSFETs, Thyristoren, IGBTs, IGCTs und dergleichen ausgebildet sein. Zwischen den beiden Leistungsschaltern 32, 33 befindet sich der jeweilige Phasenanschluss $K_U$, $K_V$ und $K_W$. Die Leistungsschalter 32, 33 werden durch Steuersignale $T_1$ bis $T_6$ angesteuert.

Im Detail werden ein erster High-Side-Leistungsschalter 32a einer ersten Inverterschaltung 31 a von einem ersten Steuersignal $T_1$ und ein erster, zu dem ersten High-Side-Leistungsschalter 32a in Reihe geschalteter Low-Side-Leistungsschalter 33a der ersten Inverterschaltung 31a von einem zweiten Steuersignal $T_2$ angesteuert. In entsprechender Weise werden ein zweiter High-Side-Leistungsschalter 32b einer zweiten der Inverterschaltungen 31 b mit einem dritten Steuersignal $T_3$ und ein zweiter Low-Side-Leistungsschalter 33b der zweiten Inverterschaltung 31 b von einem vierten Steuersignal $T_4$ angesteuert. Entsprechend wird ein dritter High-Side-Leistungsschalter 32c einer dritten der Inverterschaltungen 31 c von einem fünften Steuersignal $T_5$ und ein dritter Low-Side-Leistungsschalter 33c von einem sechsten Steuersignal $T_6$ angesteuert. Die Ansteuerung der Leistungsschalter erfolgt so, dass diese entweder ein- oder ausgeschaltet sind, d.h. leitend oder nicht leitend geschaltet sind, je nach Pegel des betreffenden Steuersignals $T_1$ bis $T_6$.

Die Treiberschaltung 3 wird durch eine Steuereinheit 4 angesteuert, die die Steuersignale $T_1$ bis $T_6$ bereitstellt. Ferner ist ein Spannungsdetektor 41 in der Steuereinheit 4 vorgesehen, um eine Spannung an einem oder an mehreren Phasenanschlüssen $K_U$, $K_V$ und $K_W$ zu messen. Im vorliegenden Ausführungsbeispiel misst der Spannungsdetektor 41 das Phasenspannungspotential an dem Phasenanschluss $K_U$.

In Figur 2 ist ein Muster zur Blockkommutierung dargestellt, das von der Steuereinheit 4 umgesetzt wird. Die Steuereinheit 4 steuert durch Vorgabe der entsprechenden Steuersignale $T_1$ bis $T_6$ die Inverterschaltungen 31 a, 31 b, 31 c so an, dass abhängig von der elektrischen Rotorlage der elektrischen Maschine 2 ein positives Spannungspotential, ein negatives Spannungspotential oder ein schwebendes Potential an dem betreffenden Phasenanschluss ausgegeben wird.

Die Höhe der ausgegebenen Phasenspannung ergibt sich durch Vorsehen einer Pulweitenmodulation, wobei positive Phasenspannungspotentiale durch ein Tastverhältnis der Pulweitenmodulation von größer als 50% und negative Phasenspannungspotentiale durch ein Tastverhältnis TV der Pulsweitenmodulation von kleiner als 50% dargestellt werden können. Die Pulsweitenmodulation sieht eine zyklische Ansteuerung der Leistungsschalter 32, 33 der Inverterschaltungen 31 a, 31 b, 31 c mit einer vorgegebenen Zykluszeit vor. Das Tastverhältnis entspricht dem Verhältnis einer Einschaltzeit des High-Side-Leistungsschalters zu der vorgegebenen Zykluszeit.

Bei der Blockkommutierung ist vorgesehen, dass ein Umschalten von einem positiven Phasenspannungspotential zu einem negativen Phasenspannungspotential bei Änderungen der Phasenlage von 180° erfolgt. Die drei Inverterschaltungen 31a, 31 b, 31c werden mit einem Phasenversatz von 120° zueinander angesteuert, so dass sich ein umlaufender Spannungszeiger ergibt.

Wie aus dem Diagramm der Figur 2 ersichtlich ist, muß eine Umkommutierung jeweils in Phasen von 60° bezüglich der elektrischen Rotorlage erfolgen. Damit dies erfolgen kann, muss eine Kenntnis der momentanen Rotorlage vorhanden sein. Bei einem sensorlosen Verfahren zum Betreiben des Synchronmotors 2 muss die Angabe über die momentane Rotorlage aus elektrischen Größen ermittelt werden.

Ein mögliches Verfahren zur Detektion der Rotorlage besteht darin, einen Nulldurchgang des Verlaufs der induzierten Gegenspannung zu ermitteln. Die induzierte Gegenspannung an einem Phasenanschluss kann jedoch nur dann ermittelt werden, wenn kein externes Potential an den Phasenanschluss angelegt wird. Daher werden üblicherweise zur Messung des Spannungspotentials an dem Phasenanschluss für eine bestimmte Zeitdauer und eine bestimmte Zeitdauer nach einer erwarteten Umkommutierung sowohl der entsprechende HighSide-Leistungsschalter 32a, 32b, 32c als auch der entsprechende Low-Side-Leistungsschalter 33a, 33b, 33c der Inverterschaltung 31a, 31b, 31c, an der die Messung vorgenommen werden soll, deaktiviert und das resultierende Spannungspotential an dem Phasenanschluss wird ermittelt.

Durch den innerhalb der so vorgesehenen Austastlücke AT ermittelten Verlauf der induzierten Gegenspannung kann der Zeitpunkt des Nulldurchgangs der induzierten Gegenspannung ermittelt werden, der einer bestimmten elektrischen Rotorlage zuordenbar ist. Der Zeitpunkt des Nulldurchgangs bestimmt in der Regel den geeigneten Zeitpunkt der Umkommutierung bzw. dieser ist davon abhängig. In Figur 2 ist beispielhaft das Vorsehen der Austastlücke AT der ersten Inverterschaltung 31a gestrichelt dargestellt.

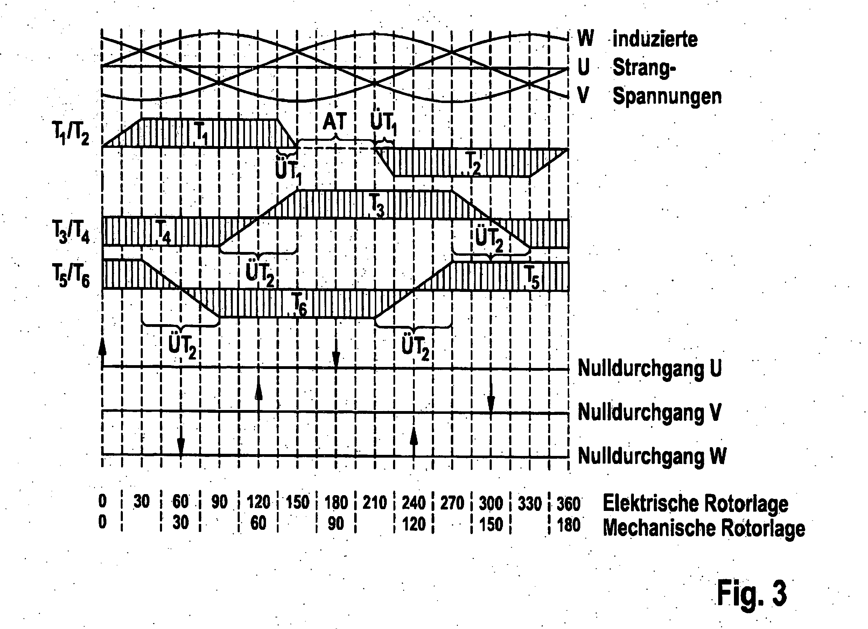

Das Verfahren der Blockkommutierung zur Ansteuerung eines Synchronmotors 2 kann aufgrund der sprunghaften Änderungen der Phasenspannungspotentiale an den Phasenanschlüssen $K_U$, $K_V$ und $K_W$ zu einer hohen Geräuschentwicklung führen. Es kann daher vorgesehen sein, die Übergänge mit geringeren Gradienten zu gestalten, wie es beispielsweise in Figur 3 dargestellt ist. Figur 3 zeigt ein Ansteuermuster einer Trapezkommutierung, wobei die Übergänge von dem Anlegen eines positiven Phasenspannungspotentials zu einem negativen Phasenspannungspotential an einen der Phasenanschlüsse während der zweiten Übergangszeitdauer ÜT2 und umgekehrt linear ausgeformt sind. Ein solcher linearer Übergang lässt sich in der Regel nicht mit einer Austastlücke AT kombinieren, da die Austastlücke AT die Bereiche des Übergangs zwischen dem positiven und dem negativen Phasenspannungspotential überdecken würde.

Es ist daher vorgesehen, für mindestens einen der Umkommutierungsvorgänge eine Austastlücke AT vorzusehen und das anzulegende Phasenspannungspotential mit einer auf einen vorgegebenen Steigungsgrenzwert begrenzten Steigung (Gradient) während einer ersten Übergangszeitdauer ÜT1 auf Null bzw. ein schwebendes Potential zu führen, so dass eine Austastlücke AT vorgesehen wird. Dies kann beispielsweise nur zur Detektion eines einzigen Nulldurchgangs verwendet werden, da dies in der Regel für die Anwendungen mit geringer Dynamikanforderung, wie beispielsweise bei Pumpen und Lüftern, ausreichend ist, um die übrigen Umkommutierungszeitpunkte zu ermitteln.

Im vorliegenden in Figur 3 gezeigten Ausführungsbeispiel ist ein Diagramm dargestellt, in dem nur der negative Nulldurchgang des Phasenanschlusses $K_U$ verwendet wird, um den Zeitpunkt des Nulldurchgangs der induzierten Gegenspannung zu ermitteln. Es wird beispielsweise eine Austastlücke AT von 60° elektrischer Rotorlage vorgesehen, wobei innerhalb eines ersten Bereichs einer Übergangszeitdauer (ÜT1) von 15° elektrischer Rotorlage vor der Austastlücke AT ein linearer Übergang von einem hohen Phasenspannungspotential (Tastverhältnis TV > 50%) (TV: Tastverhältnis) zu einem neutralen Phasenspannungspotential (Tastverhältnis TV = 50%) zu dem jeweiligen anzulegenden Phasenspannungspotential mit einem begrenzten Gradienten vorgesehen wird. Analog wird innerhalb eines zweiten Bereichs einer ersten Übergangszeitdauer ÜT1 von 15° elektrischer Rotorlage nach der Austastlücke AT ein linearer Übergang von dem neutralen Phasenspannungspotential (Tastverhältnis TV = 50%) zu einem niedrigen Phasenspannungspotential (Tastverhältnis TV < 50%) mit einem begrenzten Gradienten vorgesehen. Der erste und der zweite Bereich der ersten Übergangszeitdauern ÜT1 summieren sich zu insgesamt 30° elektrischer Rotorlage.

Die übrigen Übergänge zwischen den positiven und den negativen Phasenspannungspotentialen der anderen Inverterschaltungen 31 und der positiven Nulldurchgänge werden während einer zweiten Übergangszeitdauer ÜT2 von z. B. 60° elektrischer Rotorlage vorgenommen. Bei einem linearen Übergang entspricht der Gradient der Änderung des Tastverhältnisses TV

$$(TV_{vorher} - TV_{nachher}) / (ÜT2).$$

Die zweite Übergangszeitdauer muss nicht 60° elektrischer Rotorlage entsprechen, sondern kann auch anderen Lagedifferenzen entsprechen.

Die Übergänge zwischen dem positiven und dem negativen Phasenspannungspotential erfolgen in den obigen Ausführungsformen jeweils mit einem definierten vorgegebenen Gradienten (linearer Übergang), können aber auch mit einem Übergang erfolgen, der einen variablen Gradienten aufweist. Der Betrag des Gradienten sollte einen bestimmten vorgegebenen Gradientenschwellenwert jedoch nicht überschreiten.

Typischerweise erfolgt die Ermittlung des Nulldurchgangs der induzierten Gegenspannung jeweils nach 360° der elektrischen Rotorlage; die Ermittlung kann jedoch auch jeweils nach einem Vielfachen von 360° der elektrischen Rotorlage erfolgen, so dass nicht in jedem Umlauf der elektrischen Rotorlage ein derartiges Zeitfenster vorgesehen werden muss.

Aus der benötigten Summe der Übergangszeitdauern ÜT1 von z. B. 30° elektrischer Rotorlage bestimmt die Steuereinheit 4 die Tastverhältnisänderung (Gradient des Tastverhältnisses) dTV/dt, die für den linearen Auf- und Abbau über die Übergangszeitdauer ÜT1 genutzt wird.

$$dTV/dt = (TV_{vorher} - TV_{nachher}) / (\ddot{U}T1)$$

Für die Änderung des Tastverhältnisses in aufeinander folgenden Zykluszeitperioden ergibt sich:

$$\Delta PWM = dTV/dt / (Zykluszeit\ der\ Pulsweitenmodulation)$$

Typischerweise erfolgt die Anpassung bzw. Änderung des Tastverhältnisses TV nach jeder abgelaufenen Zykluszeitdauer der Pulsweitenmodulation. Es können aber auch Vielfache der Zykluszeitdauer ausreichen, um geringere Belastungen des als Steuereinheit vorgesehenen Mikrocontrollers zu erzielen. Damit kann ein Mikrocontroller verwendet werden, um die linearen Kommutierungsübergänge zu realisieren.

In der in Figur 3 dargestellten Ausführungsform wird ein linearer Übergang zwischen zwei Phasenspannungspotentialen unterschiedlichen Vorzeichens vorgesehen, wobei bei Vorsehen einer Austastlücke AT der Übergang des Phasenspannungspotentials zu dem schwebenden Potential mit der doppelten Steigung vorgesehen wird. Bei Verwendung des Aufbaus der Treiberschaltung 3, wie sie in Figur 1 dargestellt ist, wird also das Tastverhältnis von einem positiven Phasenspannungspotential zu einem Tastverhältnis von 50% mit einer vorbestimmten Steigung zurückgeführt. Der High-Side-Leistungsschalter 32a und der Low-Side-Leistungsschalter 33a werden dann nicht leitend geschaltet, um die Austastlücke AT zu realisieren. Am Ende der Austastlücke AT wird, beginnend mit einem Tastverhältnis von 50%, das Tastverhältnis TV weiter gemäß der vorgegebenen Steigung reduziert, bis zu dem Tastverhältnis TV, mit dem das gewünschte negative Phasenspannungspotential an den betreffenden Phasenanschluss angelegt wird.

Wie oben erläutert, wird das Tastverhältnis der Pulsweitenmodulation bezüglich eines Tastverhältnisses von 50% nach positiver und negativer Richtung geändert. Allerdings ergibt sich dann beim geringsten Tastverhältnis immer noch ein Takten der Pulsweitenmodulation, so dass der Low-Side-Leistungsschalter 33a, 33b, 33c nie für längere Zeit gegen Masse schaltet. Dadurch wird insbesondere bei hohen Leistungen die Ladungspumpe für den High-Side-Leistungsschalter nicht ausreichend nachgeladen. Für diesen Fall wird insgesamt das niedrigste vorkommende Tastverhältnis der Pulsweitenmodulation als Offsetwert abgezogen und es werden damit die Low-Side-Leistungechalter in den negativen Bestromungsphasen dauerhaft gegen Masse geschaltet. Dies verbessert das Nachladen der Ladungspumpe deutlich. Bei dem Phasenspannungspotential entstehen damit ausreichende Zeiten, in denen die Nachladung der Ladungspumpe erfolgt.

**Patentansprüche**

1. Verfahren zum Betreiben einer elektronisch kommutierten elektrischen Maschine (2), wobei für eine Kommutierung wechselnde Phasenspannungspotentiale an die Phasenstränge der elektrischen Maschine (2) gemäß einer Blockkommutierung angelegt werden, wobei die Blockkommutierung vorsieht, dass zu jedem Zeitpunkt die Phasenstränge mit einem ansteuernden Phasenspannungspotenzial belegt sind, wobei die Phasenspannungspotentiale durch eine Pulsweitenmodulation erzeugt werden, so dass die Höhe des anliegenden Phasenspannungspotentials durch ein Tastverhältnis (TV) der Pulsweitenmodulation bestimmt ist,
wobei zum Bestimmen eines Zeitpunkts eines Nulldurchgangs einer in einem Phasenstrang induzierten Spannung eine Austastlücke (AT) vorgesehen ist, die ein Zeitfenster darstellt, während dessen kein Phasenspannungspotential an den entsprechenden Phasenstrang angelegt wird,
wobei vor und/oder nach der Austastlücke (AT) eine erste Übergangszeitdauer (ÜT1) vorgesehen ist, während der der Verlauf des angelegten Phasenspannungspotentials einen begrenzten ersten Gradienten aufweist.

2. Verfahren nach Anspruch 1, wobei das Phasenspannungspotential während der Übergangszeitdauer (ÜT1) linear verläuft.

3. Verfahren nach Anspruch 1 oder 2, wobei bei jedem Wechsel zwischen Phasenspannungspotentialen während einer zweiten Übergangszeitdauer (ÜT2) der Verlauf des angelegten Phasenspannungspotentials einen begrenzten zweiten Gradienten aufweist.

4. Verfahren nach Anspruch 3, wobei der zweite Gradient der Phasenspannungspotentiale betragsmäßig geringer ist als der erste Gradient der Phasenspannungspotentiale.

**5.** Verfahren nach einem der Ansprüche 1 bis 4, wobei während der ersten Übergangszeitdauer (ÜT1) der Verlauf des Phasenspanungspotentials von einem Mittenspannungspotential ausgeht oder an dem Mittenspannungspotential endet, wobei das Mittenspannungspotential als der Mittelwert der Phasenspannungspotentiale vor und nach der mit den Übergangszeitdauern versehenen Austastlücke (AT) bestimmt ist.

**6.** Vorrichtung zum Betreiben einer elektronisch kommutierten elektrischen Maschine (2) mit einer Steuereinheit (4), die ausgebildet ist,

- um für eine Kommutierung wechselnde Phasenspannungspotentiale an die Phasenstränge der elektrischen Maschine (29 anzulegen, wobei die Kommutierung einer Blockkommutierung entspricht, die vorsieht, dass zu jedem Zeitpunkt die Phasenstränge mit einem ansteuernden Phasenspannungspotenzial belegt sind,
- um die Phasenspannungspotentiale durch eine Pulsweitenmodulation zu erzeugen, so dass die Höhe des anliegenden Phasenspannungspotentials durch ein Tastverhältnis (TV) der Pulsweitenmodulation bestimmt ist,
- um zum Bestimmen eines Zeitpunkts eines Nulldurchgangs einer in einem Phasenstrang induzierten Spannung eine Austastlücke (AT) vorzusehen, die ein Zeitfenster darstellt, während dessen kein Phasenspannungspotential an den entsprechenden Phasenstrang angelegt wird, und
- um vor und/oder nach der Austastlücke (AT) eine erste Übergangszeitdauer (ÜT1) vorzusehen, während der der Verlauf des angelegten Phasenspannungspotentials einen begrenzten ersten Gradienten aufweist.

**7.** Motorsystem mit einer elektronisch kommutierten elektrischen Maschine (2) und mit einer Vorrichtung nach Anspruch 6.

**8.** Computerprogrammprodukt, das einen Programmcode enthält, der, wenn er auf einer Datenverarbeitungseinrichtung ausgeführt wird, das Verfahren nach einem der Ansprüche 1 bis 5 durchführt.

**Claims**

**1.** Method for operating an electronically commutated electric machine (2), wherein alternating phase voltage potentials are applied in accordance with block commutation to the winding phases of the electric machine (2) for commutation, wherein the block commutation makes provision for a driving phase voltage potential to be applied to the winding phases at any time, wherein the phase voltage potentials are generated by pulse width modulation, with the result that the level of the phase voltage potential applied is determined by a duty factor (TV) of the pulse width modulation, wherein, in order to determine a time for a zero crossing of a voltage induced in a winding phase, a blanking interval (AT) is provided, which represents a time window during which no phase voltage potential is applied to the corresponding winding phase, wherein, prior to and/or after the blanking interval (AT), a first transition time period (ÜT1) is provided, during which the profile of the applied phase voltage potential has a limited first gradient.

**2.** Method according to Claim 1, wherein the phase voltage potential has a linear profile during the transition time period (ÜT1).

**3.** Method according to Claim 1 or 2, wherein, in the event of each change between phase voltage potentials during a second transition time period (ÜT2), the profile of the applied phase voltage potential has a limited second gradient.

**4.** Method according to Claim 3, wherein the second gradient of the phase voltage potentials has a smaller magnitude than the first gradient of the phase voltage potentials.

**5.** Method according to one of Claims 1 to 4, wherein, during the first transition time period (ÜT1), the profile of the phase voltage potential starts from a mid-voltage potential or ends at the mid-voltage potential, wherein the mid-voltage potential is determined as the mean value for the phase voltage potentials prior to and after the blanking interval (AT) provided with the transition time periods.

**6.** Apparatus for operating an electronically commutated electric machine (2) comprising a control unit (4), which is designed

- to apply alternating phase voltage potentials to the winding phases of the electric machine (2) for commutation, wherein the commutation corresponds to block commutation which makes provision for a driving phase voltage potential to be applied to the winding phases at any time,

- to generate the phase voltage potentials by pulse width modulation, with the result that the level of the applied phase voltage potential is determined by a duty factor (TV) of the pulse width modulation,
- to provide a blanking interval (AT) for determining a time of a zero crossing of a voltage induced in a winding phase, said blanking interval representing a time window during which no phase voltage potential is applied to the corresponding winding phase, and
- to provide a first transition time period (ÜT1) prior to and/or after the blanking interval (AT), during which first transition time period the profile of the applied phase voltage potential has a limited first gradient.

7. Motor system comprising an electronically commutated electric machine (2) and an apparatus according to Claim 6.

8. Computer program product which contains a program code which, when it is run on a data processing device, implements the method according to one of Claims 1 to 5.

**Revendications**

1. Procédé pour faire fonctionner une machine électrique (2) à commutation électronique, des potentiels de tension de phase alternés étant appliqués pendant une commutation aux branches de phase de la machine électrique (2) conformément à une commutation en bloc, la commutation en bloc prévoyant qu'à chaque instant, les branches de phase sont occupées par un potentiel de tension de phase d'excitation, les potentiels de tension de phase étant générés par une modulation d'impulsions en largeur de sorte que l'amplitude du potentiel de tension de phase appliqué soit définie par un rapport cyclique (TV) de la modulation d'impulsions en largeur,
un intervalle de suppression (AT) étant prévu pour définir un instant d'un passage par zéro d'une tension induite dans une branche de phase, lequel représente une fenêtre de temps pendant laquelle aucun potentiel de tension de phase n'est appliqué à la branche de phase correspondante,
une première durée de transition (ÜT1) étant prévue avant et/ou après l'intervalle de suppression (AT), pendant laquelle le tracé du potentiel de tension de phase appliqué présente un premier gradient limité.

2. Procédé selon la revendication 1, selon lequel le potentiel de tension de phase évolue de manière linéaire pendant la durée de transition (ÜT1).

3. Procédé selon la revendication 1 ou 2, selon lequel, à chaque changement entre les potentiels de tension de phase pendant une deuxième durée de transition (ÜT2), le tracé du potentiel de tension de phase appliqué présente un deuxième gradient limité.

4. Procédé selon la revendication 3, selon lequel le deuxième gradient des potentiels de tension de phase présente une valeur inférieure à celle du premier gradient des potentiels de tension de phase.

5. Procédé selon l'une des revendications 1 à 4, selon lequel, pendant la première durée de transition (ÜT1), le tracé du potentiel de tension de phase commence à un potentiel de moyenne tension ou se termine au potentiel de moyenne tension, le potentiel de moyenne tension étant défini comme la valeur médiane des potentiels de tension de phase après et avant l'intervalle de suppression (AT) pourvu des durées de transition.

6. Dispositif pour faire fonctionner une machine électrique (2) à commutation électronique comprenant une unité de commande (4), laquelle est configurée pour,

- appliquer des potentiels de tension de phase alternés pendant une commutation aux branches de phase de la machine électrique (2), la commutation correspondant à une commutation en bloc qui prévoit qu'à chaque instant, les branches de phase sont occupées par un potentiel de tension de phase d'excitation,
- générer les potentiels de tension de phase par une modulation d'impulsions en largeur de sorte que l'amplitude du potentiel de tension de phase appliqué soit définie par un rapport cyclique (TV) de la modulation d'impulsions en largeur,
- prévoir un intervalle de suppression (AT) pour définir un instant d'un passage par zéro d'une tension induite dans une branche de phase, lequel représente une fenêtre de temps pendant laquelle aucun potentiel de tension de phase n'est appliqué à la branche de phase correspondante, et
- prévoir une première durée de transition (ÜT1) avant et/ou après l'intervalle de suppression (AT), pendant laquelle le tracé du potentiel de tension de phase appliqué présente un premier gradient limité.

7. Système à moteur équipé d'une machine électrique (2) à commutation électronique et équipé d'un dispositif selon la revendication 6.

8. Produit de programme informatique qui contient un code de programme qui, lorsqu'il est exécuté sur un appareil de traitement de données, met en oeuvre le procédé selon l'une des revendications 1 à 5.

**Fig. 1**

**Fig. 2**

Fig. 3

EP 2 596 577 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007252542 A
- US 6181093 B
- US 6064175 A
- US 5493189 A